(19) Europäisches Patentamt
European Patent Office
Office européen des brevets

(11) EP 2 148 797 B1

(12) **EUROPEAN PATENT SPECIFICATION**

(45) Date of publication and mention
of the grant of the patent:
**20.03.2013 Bulletin 2013/12**

(51) Int Cl.:
***B60Q 3/00*** *(2006.01)*     ***B60Q 3/02*** *(2006.01)*
***G02B 6/00*** *(2006.01)*

(21) Application number: **08767417.2**

(22) Date of filing: **23.04.2008**

(86) International application number:
**PCT/US2008/005228**

(87) International publication number:
**WO 2008/133903 (06.11.2008 Gazette 2008/45)**

(54) **LIGHTING ASSEMBLY**

BELEUCHTUNGSVORRICHTUNG

ENSEMBLE D'ÉCLAIRAGE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.04.2007 US 926548 P**

(43) Date of publication of application:
**03.02.2010 Bulletin 2010/05**

(73) Proprietor: **Tyco Electronics Canada ULC
Markham, ON L3R 1E1 (CA)**

(72) Inventor: **GOTO, Kazuhiro
Markham, ON L3P 1K7 (CA)**

(74) Representative: **Johnstone, Douglas Ian et al
Baron Warren Redfern
Cambridge House
100 Cambridge Grove
Hammersmith
London
W6 0LE (GB)**

(56) References cited:
**EP-A- 1 099 902      DE-A1- 10 153 543
DE-A1- 10 208 045      DE-A1- 10 321 520
FR-A- 2 512 870      US-A- 2 259 910
US-A1- 2006 171 137      US-B1- 6 234 439**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to lighting assemblies, and more particularly to lighting assemblies for internal automotive applications.

Current automobiles have numerous lighting requirements for lighting internal locations or features of the automobile, such as dashboard lighting, map lighting, and lighting of particular internal compartments, such as glove boxes and cup holders.

These internal lighting applications require unique lighting configurations with specific lighting demands, such as specific light shapes and sizes with even or focused lighting. Furthermore, some applications require lighting around compartment peripheries which introduces additional challenges to even illumination.

Light guides have been employed as solutions for internal automotive lighting of unique configuration. These prior solutions generally involve the uni-directional flow of light, which tends to result in uneven illumination and provides less than satisfactory results. Furthermore, the use of light emitting diodes (LEDs) as a light source with known light guide devices generally create areas of concentrated intensity, sometimes called hot spots, that exaggerates the uneven illumination. FR 2512870 discloses a body of illumination comprising an annular body and a connecting portion in the form a prism. The prism directs light to two inclined surfaces, and the inclined surfaces reflect the light in opposite directions around the annular body. The annular body has steps on a lower side of the ring to reflect light to an upper side of the ring to provide illumination. DE 10208045 discloses an illumination ring with a light source, the illumination ring having an outer surface for transmitting light and a light diffusing portion for refracting light to the outer surface.

The solution is provided by a lighting assembly as disclosed in any of the appended claims.

Other features and advantages of the present invention will be apparent from the following more detailed description of exemplary embodiments, taken in conjunction with the accompanying drawings which illustrate, by way of example, the principles of the invention.

Figure 1 shows a cross section of a lighting assembly installed with a cup holder in accordance with an exemplary embodiment not forming part of the invention.

Figure 2 shows a bottom perspective view of the lighting assembly and cup holder of Figure 1.

Figure 3 shows a perspective view of the lighting assembly of Figure 1.

Figure 4 shows a bottom perspective view of the lighting assembly of Figure 3.

Figure 5 shows a partial perspective view of the transparent ring and mounting brackets for the lighting assembly of Figure 3.

Figure 6 shows a perspective view of a lighting assembly installed with a cup holder in accordance with another exemplary embodiment not forming part of the invention.

Figure 7 shows a cross section of the lighting assembly of Figure 6.

Figure 8 shows a partial perspective view of the lighting assembly of Figure 6 showing the lamp assembly attached to the transparent ring.

Figure 9 shows a perspective view of the lamp assembly of the lighting assembly of Figure 6.

Figure 10 shows a partial perspective view of the ring and mounting brackets for the lighting assembly of Figure 6.

Figure 11 shows a diagrammatic top view of a section of the lighting assembly of Figure 6.

Figure 12 shows a perspective view of a lighting assembly for a dual cup holder in accordance with an exemplary embodiment of the invention.

Figure 13 shows a perspective top view of the lamp assembly mounting area of the lighting assembly of Figure 12.

Figure 14 shows a diagrammatic top view of the lighting assembly of Figure 12.

Figure 15 shows a lighting assembly for a dual cup holder having a partially enclosed lamp assembly cavity in accordance with another exemplary embodiment of the invention.

Figure 16 shows a diagrammatic cross section of the lamp assembly mounting area of the lighting assembly of Figure 15.

Figure 17 shows a lighting assembly having two lamp assemblies in accordance with still another exemplary embodiment of the invention.

Figure 18 shows a cross section of the lighting assembly of Figure 17.

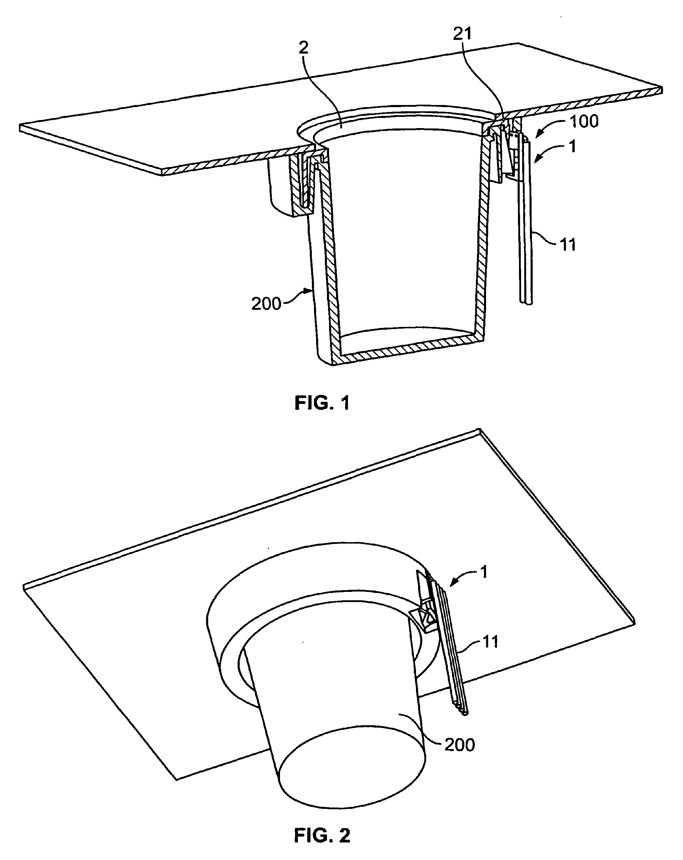

Generally referring to Figures 1 and 2, exemplary embodiments not forming part of the invention are directed to a lighting assembly 100, such as those that may be used for lighting an automotive cup holder 200.

The lighting assembly 100 comprises a lamp assembly 1 that provides light to a transparent ring 2 that surrounds the perimeter of the cup holder 200. By "ring" is meant any geometry that forms a complete loop and is not limited to circular geometries as shown in Figure 1, as seen for example, with reference to other exemplary embodiments illustrated and discussed herein.

The transparent ring 2 comprises angled diffusive and inwardly reflective surfaces arranged and disposed to achieve a level of total internal reflection within the ring while still allowing some light to exit through one or more other surfaces to permit illumination. The transparent ring 2 is solid and includes at least two smooth surfaces that are inwardly reflective to light within the ring 2, such that the surfaces reflect light internally around the entire ring. The ring 2 also includes at least one diffusive surface so that some of the light can escape to provide the desired illumination. The lamp assembly 1 casts light toward the reflective and diffusive surfaces of the transparent ring 2 to provide an even, effective perimeter of light to illuminate the cup holder 200.

The lamp assembly 1 and transparent ring 2 are configured and positioned with respect to one another such that light from the lamp assembly 1 is distributed in both directions around the transparent ring 2. That is, the light from the lamp assembly 1 is tangentially directed both in a clockwise and a counterclockwise direction in a complete loop around the transparent ring 2. As a result, a substantially uniform distribution of light around the transparent ring 2 is achieved.

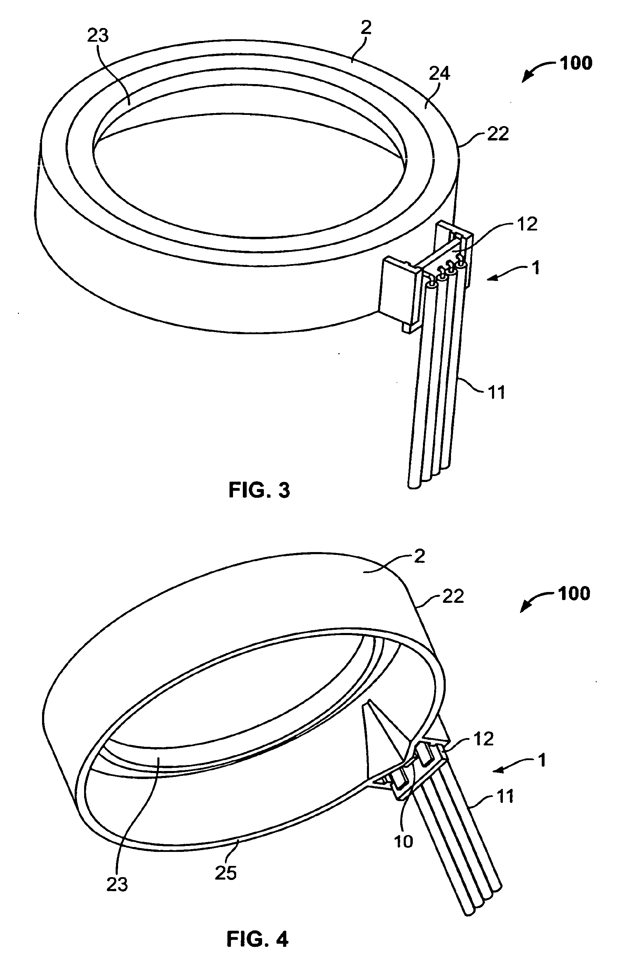

As better seen in Figures 3-4, the lamp assembly 1 comprises a lamp 10 and generally also includes a printed circuit board (PCB) 12 along with supply wires 11. The lamp 10 may be any light source, but is generally, although not necessarily, one or more light emitting diodes (LED) mounted on the PCB 12. The lamp 10 is illuminated by electricity flowing to the PCB 12 from a power source (not shown), such as an automobile battery, via supply wires 11. Various intermediate connections between the power source and the lamp assembly 1 may be present; for example, it may be desirable for the supply wires 11 to be wired into the distribution system for a vehicle's lighting.

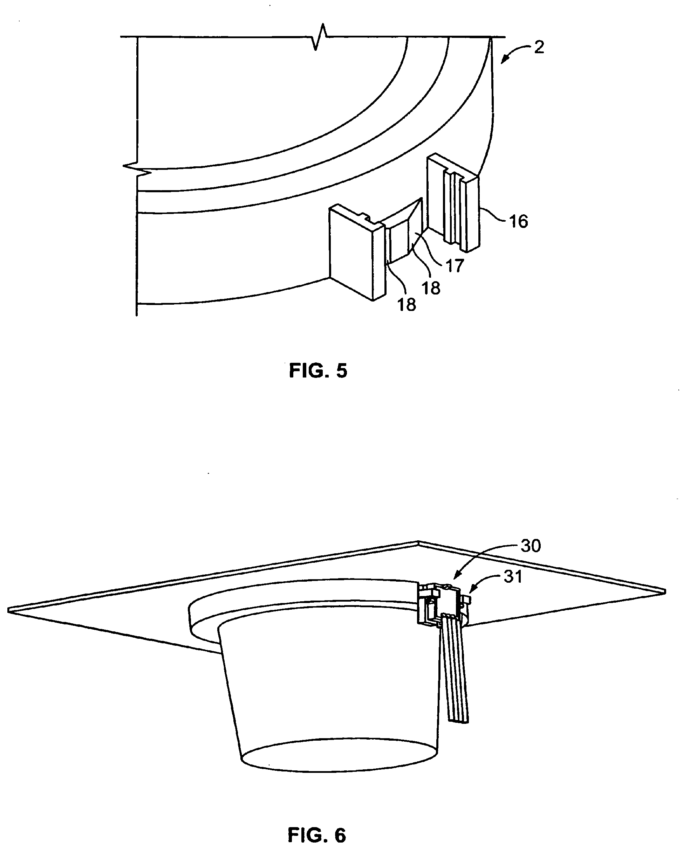

Referring to Figures 1-5, the lamp assembly 1 may be attached to the transparent ring 2 using mounting brackets 16 that extend away from the transparent ring 2 as best seen in Figure 5. The lamp assembly 1 may be secured to the transparent ring 2 in the mounting brackets 16 by using an adhesive and/or by one or more mechanical features formed in the PCB 12 (or an optional assembly housing if present) and/or the mounting brackets 16 that accomplish an interlocking of the lamp assembly 1 and ring 2.

The transparent ring 2 may be molded or otherwise formed from any optically transparent material to which reflective and diffusive surfaces can be imparted. Exemplary materials include plastics and glass; acrylics (such as polymethylmethacrylate) or polycarbonate materials are preferred.

The solid transparent ring 2 comprises a solid interior region 21, an outer surface 22, and an inner surface 23 adjacent the interior of the cup holder 200. The transparent ring 2 also comprises a top surface 24 and a bottom surface 25. In the exemplary embodiment shown in Figures 1-5, the top surface 24 is a diffusive surface while the outer surface 22, inner surface 23, and bottom surface 25 are inwardly reflective surfaces.

Alternatively, in some embodiments, the inner surface 23 may be a diffusive surface and the top surface 24 may be inwardly reflective, as discussed, for example, with reference to other exemplary embodiments herein. Other combinations of the diffusive and inwardly reflective surfaces may also be used, depending on the particular lighting effect to be achieved.

In any case, the inwardly reflective surfaces may be created by imparting a highly polished finish to the surfaces of the transparent ring 2 that are to be inwardly reflecting. This can be achieved, for example, by providing a highly polished mold surface for the portion of the mold used to the create the inwardly reflecting surfaces of the transparent ring and/or by post-molding finishing steps. In a similar manner, the diffusive surface may be created, for example, by texturing the portion of the mold used to create the ring 2 that corresponds to the particular surface of the transparent ring 2 from which light is desired to be emitted.

The use of a diffusive surface to cast light from the lighting assembly 100 into the cupholder 200 has the effect of more evenly distributing the light. The diffusive surface also provides the advantage of hiding internal structures that might otherwise be apparent through a transparent light emitting surface.

In the embodiment shown in Figures 1-5, the lamp assembly 1 is positioned with the lamp 10 facing inwardly toward the outer surface 22 of the transparent ring 2 so that light from the lamp 10 is reflected into the interior region 21 of the transparent ring 2 at an angle. More particularly, a generally V-shaped protrusion 17 is formed in, and extends from, the outer surface 22 of the transparent ring 2. Reflective surfaces 18 of the protrusion 17 direct light into the transparent ring 2 at an angle to promote simultaneous distribution of light in a loop around the ring 2 in both a clockwise and a counterclockwise direction through the interior region 21 of the transparent ring 2 by a level of total internal reflection.

Once within the interior region 21 of the transparent ring 2, some of the light strikes one or more of the inwardly reflective surfaces and is reflected in accordance with Snell's law. This law states that if the angle of incidence of a light ray striking a smooth surface is less than a critical angle, the light will be reflected internally with no light escaping, a phenomenon known as total internal reflection.

According to Snell's law, the critical angle, $\theta_c$, is defined by the equation

$$\theta_c = \arcsin (n_1/n_2) \qquad\qquad (1)$$

in which $n_1$ and $n_2$ are indices of refraction, which are physical properties of the two materials having an interface toward which the light is traveling. The index of refraction also varies, but generally to a lesser extent, with the wavelength of

the light. Here, $n_2$ is the index of refraction of the transparent ring 2 and $n_1$ is the index of refraction of the material surrounding the transparent ring 2 and which is ordinarily air (which has an index of refraction of 1). Thus, the critical angle can readily be calculated and the surfaces 18 of the protrusion 17 are angled to deflect light from the lamp tangentially so that most of the light from the lamp 10 enters the interior region 21 to have an angle of incidence on the inwardly reflective surfaces of the transparent ring 2 that is less than the critical angle.

The light from the lamp 10 is then reflected with any number of reflections within the interior region 21 of the transparent ring 2 around the ring; some light rays are reflected toward the diffusive top surface 24 of the transparent ring 2. When light reaches the top surface 24, its diffusive character allows light to escape upwardly through the top surface 24, which is thus illuminated to provide illumination of the lighting assembly 100. The diffusive surface interrupts the ability of light rays to be internally reflected, which, because of its roughness, tends to scatter light instead of reflect it.

The tangential reflections of the light from the lamp 10 from the inwardly reflective surfaces prevents uneven illumination which would result, for example, if light was introduced radially into the transparent ring 2. Preferably the inwardly reflective surfaces are continuous around the transparent ring 2. The diffusive surface is also preferably continuous to achieve a substantially uniform distribution of light, but may be discontinuous if an alternative illumination pattern is desired.

In yet another embodiment, the bottom surface 25 adjacent the inner surface 23 may be angled to reduce the distance between the top surface 24 and the bottom surface 25 to reduce the loss of light on the surface opposite the light source.

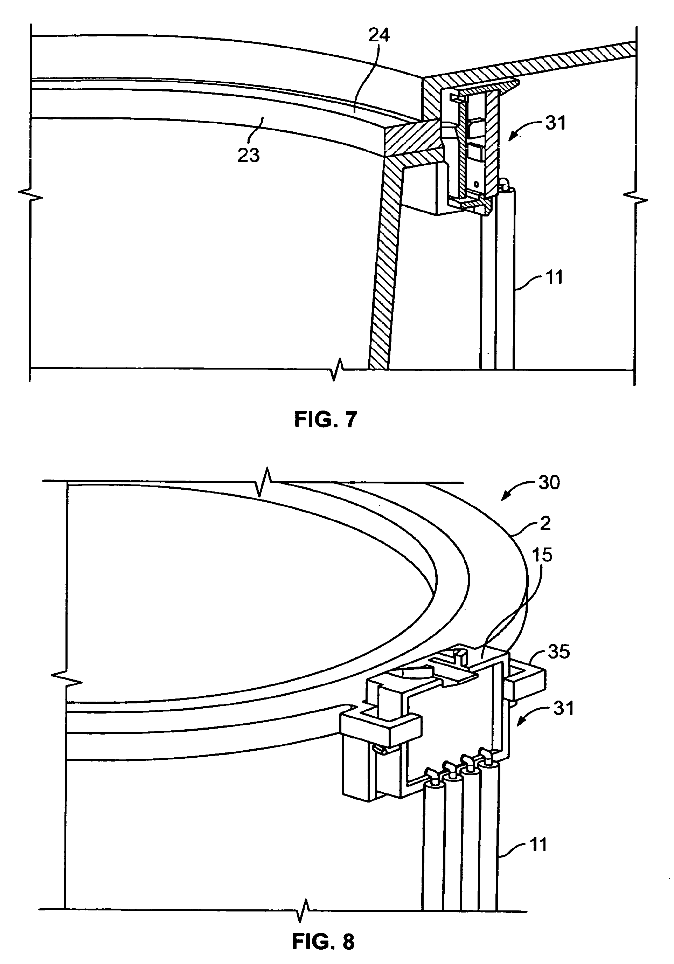

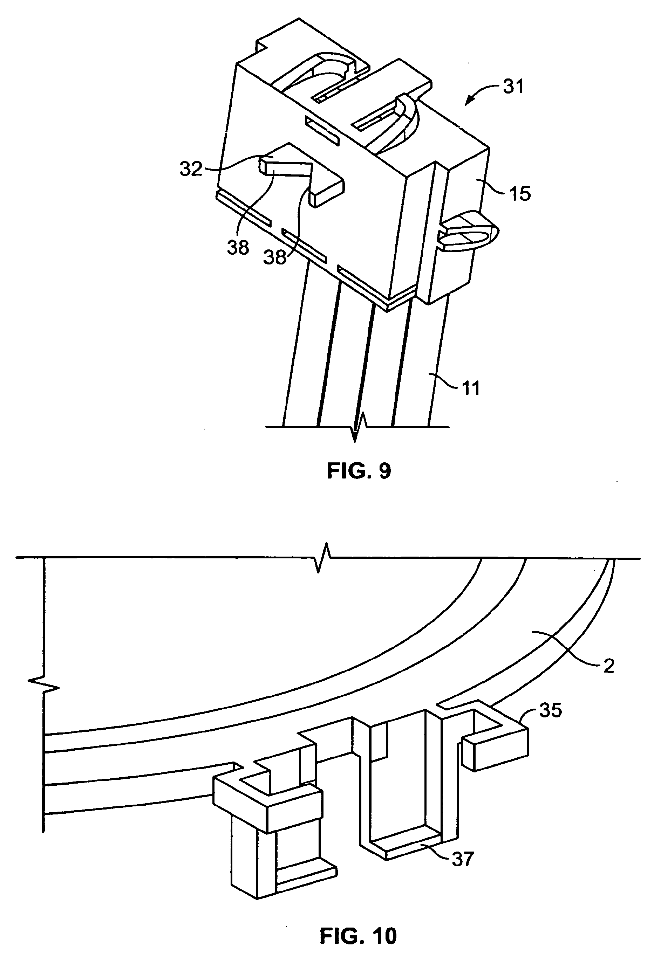

Turning to Figures 6-11, another exemplary embodiment of a lighting assembly 30 not forming part of the present invention has a lamp assembly 31 that includes a generally V-shaped lens 32, as best seen in Figure 9, that is received by and fitted into a gap in the transparent ring 2 when the lamp assembly 31 is mounted to the transparent ring 2. Mounting may be achieved by mounting brackets 35 (Figure 10), which in this embodiment illustrates a ledge 37 that provides a support for securing, to the transparent ring 2, a housing 15 that surrounds the lamp 10 and PCB 12 within the housing 15.

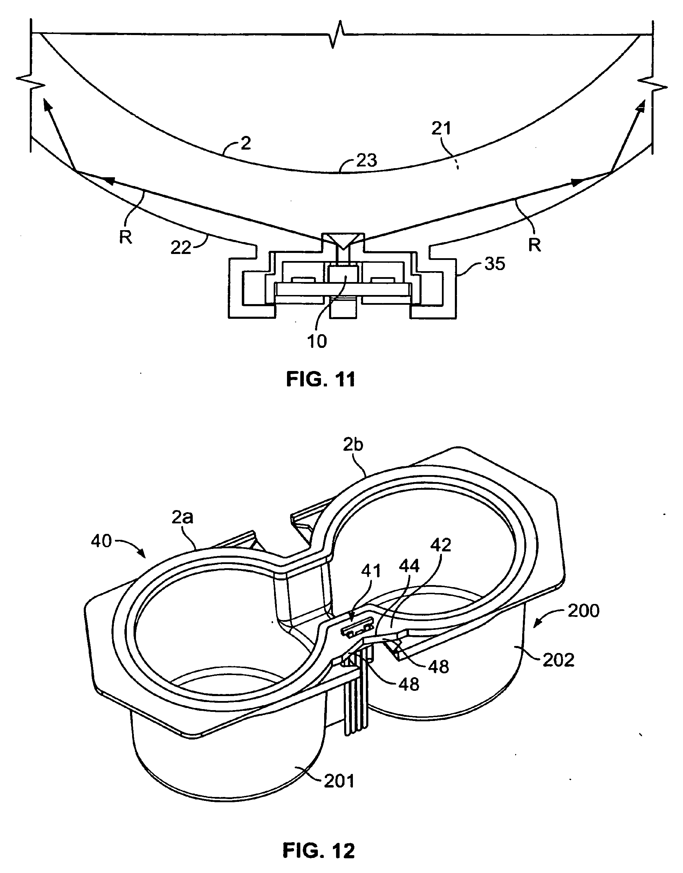

As shown in Figure 9, the lens 32 extends from the housing 15 and is positioned over the lamp 10. The lens 32 comprises first and second inwardly reflective surfaces 38 that deflect light rays R from the lamp into and around the interior region 21 of the transparent ring 2 in opposite directions, as illustrated diagrammatically in Figure 11. Thus, light from the lamp 10 is reflected sideways by the reflective surfaces 38 of the lens 32 to direct the light tangentially into the interior region 21 of the transparent ring 2, which is then reflected internally around the ring 2 as described above.

In an exemplary embodiment of the invention, a lighting assembly 40 for a dual cup holder is provided as shown in Figures 12-14. The transparent ring 2 of the lighting assembly 40 includes a first curvilinear ring segment 2a and a second curvilinear ring segment 2b that partially surround a perimeter of first and second cupholder portions 201, 202 of the cupholder 200, respectively.

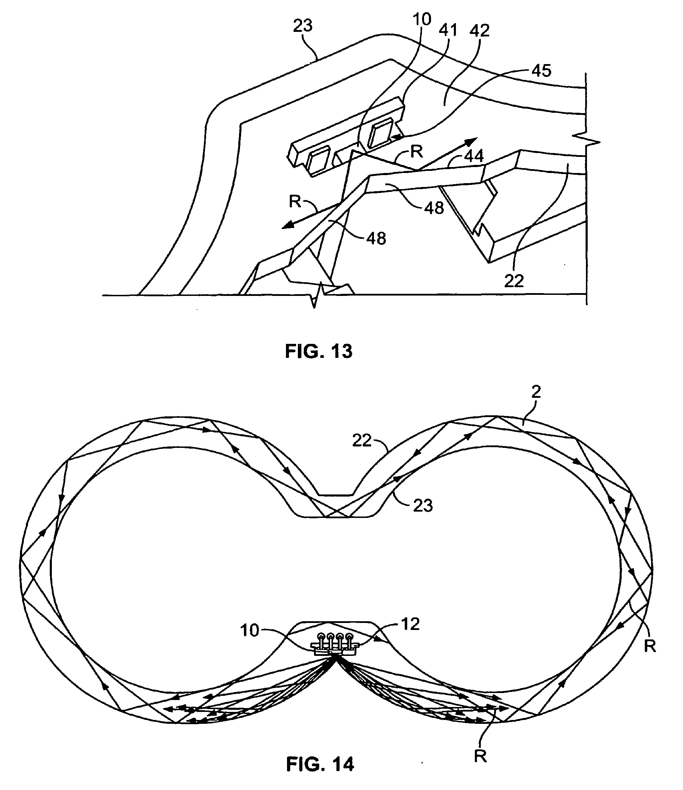

The transparent ring 2 includes an angled, generally V-shaped region 44 to deflect light tangentially around the ring 2 in each of a clockwise and counterclockwise direction; the angled region 44 is an indentation extending inward toward the lamp assembly 41. In the illustrated embodiment, this angled region 44 extends inwardly from the outer surface 22 of the ring 2 and the lamp 10 is positioned to face away from the inner surface 23 of the transparent ring 2 (as best seen in Figure 13). Facing the lamp 10 away from the inner surface 23 of the ring 2, and thus away from the cup holder 200 or other fixture in which the lighting assembly 100 is situated, further reduces the likelihood of visible hot spots.

The lamp assembly 41 is mounted within the transparent ring 2 in a lamp assembly mounting area 42. The lamp assembly mounting area 42 comprises the angled region 44 extending in a V-shape inwardly toward the lamp 10 as well as a lamp assembly cavity 45 for mounting the lamp assembly 41. The angled region 44 has at least two angled surfaces 48 that are inwardly reflective. The lamp assembly 41 is positioned within the cavity 45 of the lamp assembly mounting area 42 so that the light from the lamp 10 is cast away from the interior of the cup holder 200 towards the reflective surfaces 48 of the region 44 in the lamp mounting area 42. In a similar manner as previously described, light is reflected internally around the interior regions 21 of the entire transparent ring 2, including transparent ring segments 2a and 2b and any linear segments connecting them, via the reflective surfaces to the diffusive surface to provide the illumination of the perimeter ring. It will be appreciated that the inwardly reflective angled surfaces 48 can be straight or curved as desired, provided in either case that the angle of incidence is less than the critical angle.

Light from the lamp assembly 41 is reflected entirely around the transparent ring 2 in both a clockwise and a counterclockwise direction. As a result, even though lamp 10 is positioned to face away from the cup holder 200, light is still directed to the inner surface 23 via light rays R returning from a trip around the ring 2, as illustrated diagrammatically in Figure 14, which light is either reflected or diffused to illuminate the cup holder 200 depending on the surface treatment imparted to the inner surface 23.

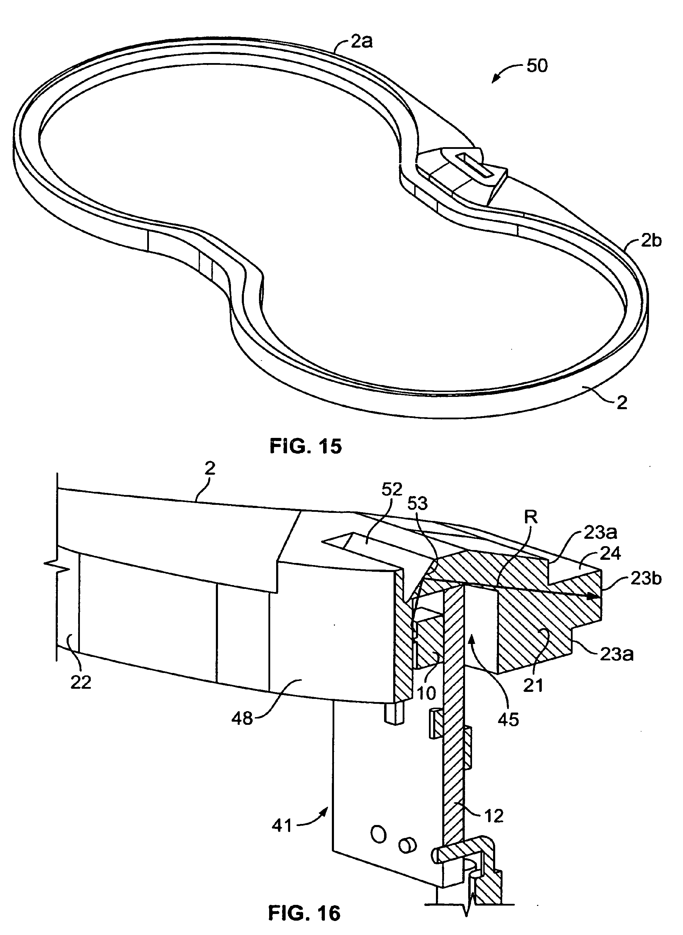

Turning to another exemplary embodiment of the invention shown in Figures 15 and 16, a lighting assembly 50 is shown. This embodiment illustrates that the substantially uniform consistency of light delivered to a diffusive inner surface 23 behind the lamp assembly 41 may be further enhanced by extending the inwardly reflective top surface 24 as a roof over the lamp assembly cavity 45. A depression 52 is provided in the inwardly reflective top surface 24 to create an inwardly reflective beveled surface 53. Thus, light leaving the lamp 10 that is initially directed, and/or reflected upward, toward the reflective beveled surface 53 is subsequently reflected over and behind the lamp assembly 41 toward a diffusive inner surface 23b of the transparent ring 2.

Figure 16 further illustrates that multiple surface treatments may be applied to the inner surface 23 to create both inwardly reflective and diffusive inner surfaces and/or that there may be inner surfaces 23a, 23b in different planes. Thus, as illustrated here, the transparent ring 2 includes two inwardly reflective inner surface 23a as well as a diffusive inner surface 23b.

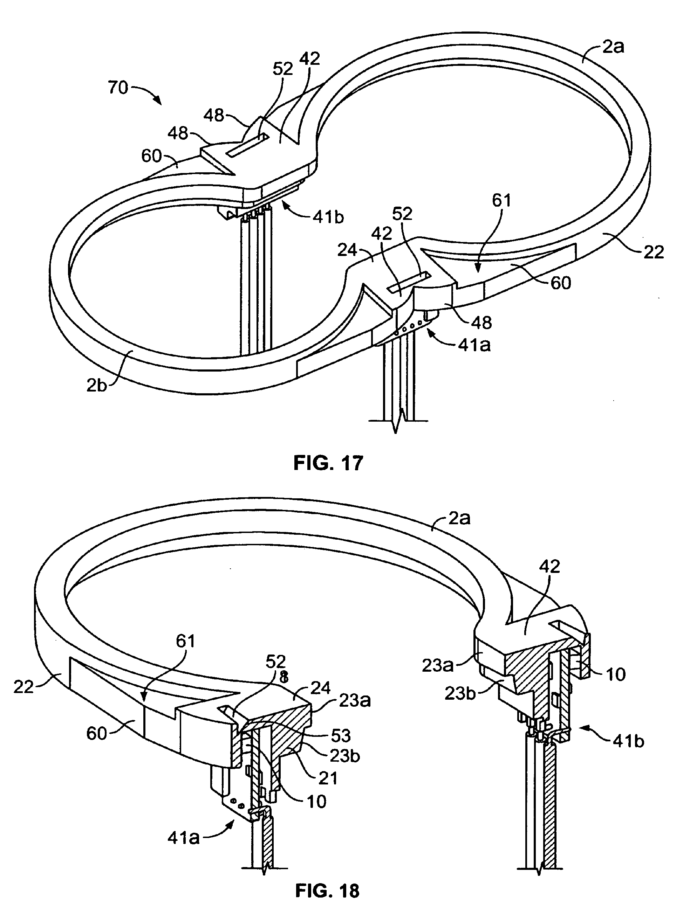

Figures 17 and 18 show an alternative embodiment of the invention in which a transparent ring 2 having dual transparent ring segments 2a and 2b for an illuminated dual cupholder includes two lamp assemblies 41 a, 41b positioned on opposites sides of the transparent ring 2 from one another. This minimizes losses from diffusion and imperfect reflection, further enhancing the evenness of the lighting in embodiments configured for multiple cupholder configurations. Figure 18 also illustrates that the diffusive inner surface 23b may be angled to direct light downwardly toward the cup holder 200 (not shown).

The embodiment shown in Figures 17 and 18 incorporates a spur portion 60 of the transparent ring 2 positioned on either or both sides of the lamp assembly 41a, 41b adjacent the lamp mounting area 42. The upper surface 61 of the spur portion 60 of the transparent ring 2 is preferably lower than the top surface 24 of the transparent ring 2, such that the spur portion 60 is not as thick as the respective ring segment 2a, 2b adjacent to it. The spur 60 acts an initial guide to direct light into the primary interior region 21 of the ring 2 that forms the perimeter of the cup holder 200; light rays leaving the lamp 10 are reflected by the reflective surfaces 48 into and through the spur 60 into the main loop that directs the light rays around the transparent ring 2.

An advantage of certain exemplary embodiments includes a more evenly lit lighting assembly by directing light around the transparent ring in both directions. Another advantage of certain exemplary embodiments is that hot spots are reduced or eliminated, further providing a more even distribution of light around the lighting assembly.

While the foregoing specification illustrates and describes exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof Therefore, it is intended that the invention not be limited to the particular embodiment disclosed as the best mode contemplated for carrying out this invention, but that the invention will include all embodiments failing within the scope of the appended claims.

## Claims

1. A lighting assembly (100, 30, 40, 50) comprising; at least one lamp assembly (1, 31, 41) comprising a lamp (10); and a transparent ring (2); wherein:

   the lamp assembly (1, 31, 41) and the transparent ring (2) are configured and arranged with respect to one another to deflect light from the lamp (10) into an interior region (21) of the transparent ring in each of a clockwise and a counterclockwise direction in a loop around the transparent ring;
   the transparent ring has at least two smooth surfaces and at least one diffusive surface, the smooth surfaces being inwardly reflective to the deflected light from the lamp to achieve a level of total internal reflection around the transparent ring, the diffusive surface allowing some of the light to escape to provide illumination; and
   **characterised in that** the lighting assembly is for a dual cup holder, wherein the transparent ring (2) is a perimeter ring configured to fully surround the perimeter of a dual cupholder and comprises a first curvilinear segment (2a) configured to partially surround a perimeter of a first cupholder portion of the dual cupholder and a second curvilinear segment (2b) configured to partially surround a perimeter of a second cupholder portion of the dual cupholder, wherein the curvilinear segments are connected by at least one linear segment.

2. The lighting assembly of claim 1, wherein the lamp assembly comprises a generally V-shaped lens (32) to deflect light from the lamp tangentially around the transparent ring.

3. The lighting assembly of claim 1, wherein the transparent ring comprises a generally V-shaped region (17, 44) to deflect light from the lamp (10) tangentially around the transparent ring (2).

4. The lighting assembly of claim 3, wherein the generally V-shaped region is a protrusion (17) extending away from an outer surface (22) of the transparent ring toward the lamp assembly (1).

**5.** The lighting assembly of claim 3, wherein the lamp assembly (41) is mounted in a cavity (45) in the transparent ring and wherein the generally V-shaped region is an indentation (44) in the transparent ring extending inwardly toward the lamp.

**6.** The lighting assembly of claim 5, wherein the lamp is positioned to face away from an inner surface (23) of the transparent ring.

**7.** The lighting assembly of claim 6, wherein the transparent ring further comprises a spur portion (60) adjacent the lamp assembly to direct light into a first ring segment (2a, 2b), wherein the spur portion has a thickness less than a thickness of the first ring segment.

**8.** The lighting assembly of claim 1, wherein the inwardly reflective smooth surfaces are continuous around the transparent ring and wherein the diffusive surface is continuous around the transparent ring.

**9.** The lighting assembly of claim 1, further comprising a second lamp assembly (41a, 41b) having a second lamp, the second lamp assembly also configured and arranged with respect to the transparent ring to deflect light from the second lamp into the interior region (21) of the transparent ring in each of a clockwise and a counterclockwise direction in a loop around the transparent ring.

**10.** The lighting assembly of claim 1, wherein a top surface (24) of the transparent ring (2) is an inwardly reflective surface to light within the transparent ring and wherein the inwardly reflective top surface includes a depression (52), the depression being beveled (53) to reflect light toward a diffusive surface of the transparent ring behind the lamp assembly.

**Patentansprüche**

**1.** Beleuchtungsbaugruppe (100, 30, 40, 50), die aufweist: mindestens eine Lampenbaugruppe (1, 31, 41), die eine Lampe (10) aufweist; und einen transparenten Ring (2); wobei:

die Lampenbaugruppe (1, 31, 41) und der transparente Ring (2) ausgebildet und mit Bezugnahme zueinander angeordnet sind, um Licht von der Lampe (10) in einen inneren Bereich (21) des transparenten Ringes in einer jeden von Uhrzeiger- und Gegenuhrzeigerrichtung in einer Schleife um den transparenten Ring abzulenken; der transparente Ring mindestens zwei glatte Flächen und mindestens eine diffusionsfähige Fläche aufweist, wobei die glatten Flächen für das abgelenkte Licht von der Lampe nach innen reflektierend sind, um ein Niveau der gesamten inneren Reflexion um den transparenten Ring zu erreichen, wobei die diffusionsfähige Fläche gestattet, dass etwas Licht austritt, um eine Beleuchtung zu liefern; und **dadurch gekennzeichnet, dass** die Beleuchtungsbaugruppe für einen Doppelbecherhalter gedacht ist, wobei der transparente Ring (2) ein umlaufender Ring ist, der ausgebildet ist, um den Umfang eines Doppelbecherhalters vollständig zu umgeben, und der ein erstes gekrümmtes Segment (2a), das ausgebildet ist, um einen Umfang eines ersten Becherhalterabschnittes des Doppelbecherhalters teilweise zu umgeben, und ein zweites gekrümmtes Segment (2b) aufweist, das ausgebildet ist, um einen Umfang eines zweiten Becherhalterabschnittes des Doppelbecherhalters zu umgeben, wobei die gekrümmten Segmente mittels mindestens eines linearen Segmentes verbunden werden.

**2.** Beleuchtungsbaugruppe nach Anspruch 1, bei der die Lampenbaugruppe ein im Allgemeinen V-förmiges Lampenglas (32) aufweist, um Licht von der Lampe tangential um den transparenten Ring abzulenken.

**3.** Beleuchtungsbaugruppe nach Anspruch 1, bei der der transparente Ring einen im Allgemeinen V-förmigen Bereich (17, 44) aufweist, um Licht von der Lampe (10) tangential um den transparenten Ring (2) abzulenken.

**4.** Beleuchtungsbaugruppe nach Anspruch 3, bei der der im Allgemeinen V-förmige Bereich ein Vorsprung (17) ist, der sich von einer Außenfläche (22) des transparenten Ringes weg in Richtung der Lampenbaugruppe (1) erstreckt.

**5.** Beleuchtungsbaugruppe nach Anspruch 3, bei der die Lampenbaugruppe (41) in einem Hohlraum (45) im transparenten Ring montiert ist, und wobei der im Allgemeinen V-förmige Bereich eine Vertiefung (44) im transparenten Ring ist, die sich nach innen in Richtung der Lampe erstreckt.

6.  Beleuchtungsbaugruppe nach Anspruch 5, bei der die Lampe so positioniert ist, dass sie von einer Innenfläche (23) des transparenten Ringes weg liegt.

7.  Beleuchtungsbaugruppe nach Anspruch 6, bei der der transparente Ring außerdem einen Strebenabschnitt (60) benachbart der Lampenbaugruppe aufweist, um Licht in ein erstes Ringsegment (2a, 2b) zu lenken, wobei der Strebenabschnitt eine Dicke aufweist, die geringer ist als eine Dicke des ersten Ringsegmentes.

8.  Beleuchtungsbaugruppe nach Anspruch 1, bei der die nach innen reflektierenden glatten Flächen kontinuierlich um den transparenten Ring verlaufen, und wobei die diffusionsfähige Fläche kontinuierlich um den transparenten Ring verläuft.

9.  Beleuchtungsbaugruppe nach Anspruch 1, die außerdem eine zweite Lampenbaugruppe (41a, 41b) mit einer zweiten Lampe aufweist, wobei die zweite Lampenbaugruppe ebenfalls ausgebildet und mit Bezugnahme auf den transparenten Ring angeordnet ist, um Licht von der zweiten Lampe in den inneren Bereich (21) des transparenten Ringes in einer jeden von einer Uhrzeiger- und Gegenuhrzeigerrichtung in einer Schleife um den transparenten Ring abzulenken.

10. Beleuchtungsbaugruppe nach Anspruch 1, bei der eine obere Fläche (24) des transparenten Ringes (2) eine nach innen reflektierende Fläche ist, um innerhalb des transparenten Ringes zu beleuchten, und bei der die nach innen reflektierende obere Fläche eine Vertiefung (52) umfasst, wobei die Vertiefung abgeschrägt (53) ist, um Licht in Richtung einer diffusionsfähigen Fläche des transparenten Ringes hinter der Lampenbaugruppe zu reflektieren.

**Revendications**

1.  Assemblage d'éclairage (100, 30, 40, 50), comprenant : au moins un assemblage de lampe (1, 31, 41), comprenant une lampe (10), et une bague transparente (2) ; dans lequel :

    l'assemblage de lampe (1, 31, 41) et la bague transparente (2) sont configurés et agencés l'un par rapport à l'autre de sorte à dévier la lumière de la lampe (10) dans une région interne (21) de la bague transparente, dans une direction allant dans le sens des aiguilles d'une montre et dans le sens contraire des aiguilles d'une montre, dans une boucle autour de la bague transparente ;
    la bague transparente comportant au moins deux surfaces lisses et au moins une surface de diffusion, les surfaces lisses réfléchissant vers l'intérieur la lumière déviée à partir de la lampe, pour établir un niveau de réflexion interne totale autour de la bague transparente, la surface de diffusion permettant l'échappement d'une partie de la lumière pour assurer l'éclairage ; et
    **caractérisé en ce que** l'assemblage d'éclairage est destiné à un double porte-gobelet, la bague transparente (2) étant une bague périmétrique configurée de sorte à entourer complètement le périmètre d'un double porte-gobelet, et comprend un premier segment curviligne (2a), configuré de sorte à entourer partiellement un périmètre d'une première partie du porte-gobelet du double porte-gobelet, et un deuxième segment curviligne (2b), configuré de sorte à entourer partiellement un périmètre d'une deuxième partie du porte-gobelet du double porte-gobelet, les segments curvilignes étant connectés par au moins un segment linéaire.

2.  Assemblage d'éclairage selon la revendication 1, dans lequel l'assemblage de lampe comprend une lentille généralement en forme de V (32) pour dévier la lumière de la lampe de manière tangentielle autour de la bague transparente.

3.  Assemblage d'éclairage selon la revendication 1, dans lequel la bague transparente comprend une région ayant en général une forme en V (17, 44), pour dévier la lumière de la lampe (10) de manière tangentielle autour de la bague transparente (2).

4.  Assemblage d'éclairage selon la revendication 3, dans lequel la région ayant en général une forme en V est une saillie (17), s'étendant à l'écart d'une surface externe (22) de la bague transparente, vers l'assemblage de lampe (1).

5.  Assemblage d'éclairage selon la revendication 3, dans lequel l'assemblage de lampe (41) est monté dans une cavité (45) dans la bague transparente, la région à forme généralement en V étant un renfoncement (44) dans la bague transparente, s'étendant vers l'intérieur en direction de la lampe.

**6.** Assemblage d'éclairage selon la revendication 5, dans lequel la lampe est positionnée de sorte à être orientée à l'écart d'une surface interne (23) de la bague transparente.

**7.** Assemblage d'éclairage selon la revendication 6, dans lequel la bague transparente comprend en outre une partie d'ergot (60) adjacente à l'assemblage de lampe pour diriger la lumière dans un premier segment de la bague (2a, 2b), la partie d'ergot ayant une épaisseur inférieure à une épaisseur du premier segment de la bague.

**8.** Assemblage d'éclairage selon la revendication 1, dans lequel les surfaces lisses à réflexion vers l'intérieur sont continues autour de la bague transparente, la surface de diffusion étant continue autour de la bague transparente.

**9.** Assemblage d'éclairage selon la revendication 1, comprenant en outre un deuxième assemblage de lampe (41a, 41b), comportant une deuxième lampe, le deuxième assemblage de lampe étant également configuré et agencé par rapport à la bague transparente de sorte à dévier la lumière de la deuxième lampe vers la région interne (21) de la bague transparente, dans une direction allant dans le sens des aiguilles d'une montre et dans le sens contraire des aiguilles d'une montre, dans une boucle autour de la bague transparente.

**10.** Assemblage d'éclairage selon la revendication 1, dans lequel une surface supérieure (24) de la bague transparente (2) est une surface réfléchissant vers l'intérieur la lumière dans la bague transparente, la surface supérieure à réflexion vers l'intérieur englobant un creux (52), le creux étant biseauté (53) pour réfléchir la lumière vers une surface de diffusion de la bague transparente derrière l'assemblage d'éclairage.

EP 2 148 797 B1

FIG. 1

FIG. 2

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2512870

- DE 10208045